# EUROPÄISCHE PATENTANMELDUNG

(11) **EP 1 002 905 A2**
(43) Veröffentlichungstag der Anmeldung: **24.05.2000**
(21) Anmeldenummer: 99122854.5
(22) Anmeldetag: 17.11.1999
(51) Int. Cl.: E03B 1/04, E03B 3/03

(54) **Regenwassersammel- und Verteilsystem mit hohem hydrostatischen Druck**

(30) Priorität: 21.11.1998 DE 19853740
(71) Anmelder: Luber, Norbert, 92237 Sulzbach-Rosenberg (DE)
(72) Erfinder: Luber, Norbert, 92237 Sulzbach-Rosenberg (DE)
(74) Vertreter: Dreykorn-Lindner, Werner, Dipl.-Ing.

(57) **Zusammenfassung**

Um ein Regenwassersammel- und Verteilsystem derart auszugestalten, dass keine im System angeordneten Pumpen erforderlich sind, wird erfindungsgemäß diese Aufgabe dadurch gelöst, dass - zur Erzeugung eines hohen hydrostatischen Drucks - das Regenwasser kurz unterhalb der vorhandenen Rinne bzw. Rinnenablaufes in einem Wasserfangkasten (1) aufgefangen wird und über ein Druckrohr (3), dessen Öffnung im Bodenbereich des Wasserfangkastens (1) liegt, einem Druckbehälter (2) zugeführt wird, welcher über einen Druckwasserstutzen (8) mit dem nachfolgenden Grauwasser- (Regenwasser-)Verteilsystem (15,18) verbunden ist. Während des Regenfalls kann sich dann das Wasser über das Druckrohr (3) bis zum höchstmöglichen Wasserstand im Wasserfangkasten (1) aufstauen und läuft danach über ein Überlaufrohr (4), dessen Öffnung oberhalb der Öffnung des Druckrohres (3) liegt, aus dem Wasserfangkasten ab.

## Beschreibung

Die Erfindung betrifft in erster Linie ein Regenwassersammel- und Verteilsystem, bei dem das über Dachrinnen in ein Regenfallrohr (4) geleitete Regenwasser in einer in das Regenfallrohr (4) eingefügten und nahe der Erdgleiche angeordneten Regenwasserableitvorrichtung und dort in eine integrierte, nach oben hin offene Regenwassersammelkammer fließt und in dieser einen niedrigen hydrostatischen Druck nach Maßgabe der Höhe der Regenwassersammelkammer erzeugt und bei dem am Ablauf der Regenwassersammelkammer ein Grauwasser-(Regenwasser-) Verteilsystem mit einem drucklosen Sammelbehälter angeschlossen ist (Oberbegriff des Patentanspruchs 1).

Die Gewinnung, Aufbereitung und Beförderung von Wasser, meist in Trinkwasserqualität, für Haushalte, Industrie und Bewässerung sowie die dazu benötigten Anlagen haben in den letzten Jahren immer mehr an Bedeutung gewonnen. Dies ist auf die steigende Tendenz des durchschnittlichen Wasserverbrauchs zurückzuführen. Schon im Jahre 1987 betrug in der Bundesrepublik Deutschland (alte Bundesländer) der durchschnittliche Wasserverbrauch in Haushalten pro Kopf 270 Liter pro Tag,

Die Leitungsanlage beim Anschluss an die zentrale Trinkwasserversorgung besteht aus einer Versorgungsleitung zum Wasserzähler, von der aus die Verbrauchsleitungen (Verteilungs-, Steig- und Zweigleitungen) abgehen. Fehlt eine zentrale Wasserversorgung, muss Trinkwasser einem auf dem Grundstück zu errichtenden Brunnen entnommen und mit einer Druckluftpumpe über frostisolierte Leitungen ins Haus gefördert werden. Wegen der hohen Kosten für die Wassergewinnung und Wasseraufbereitung sind Überlegungen bereits angestellt worden, das Abwasser entsprechend zu nutzen. Bei den Abwässern wird unterschieden zwischen Regenwasser und den zu klärenden Schmutzwässern aus Spül- und Wascheinrichtungen der Wirtschafts- und Sanitärräume, Garagen etc. sowie Fäkalien. Zur Nutzung des Regenwassers (z. B. Wäsche, Toilettenspülung, Gartengießen) werden häufig Sammelbehälter mit Überlaufversickerung installiert. Beim Fehlen eines Vorfluters (öffentlicher Kanal) lässt sich das Regenwasser bei durchlässigen Böden am einfachsten durch eine leicht erneuerbare Sickergrube oder durch einen Sickerschacht beseitigen, wobei sich gegebenenfalls der Einbau eines Sandabsetzbeckens empfiehlt.

Hausabwässer können entweder in einer Mehrkammergrube oder einer Mehrkammer-Ausfaulgrube aufgefangen und nach der Entschlammung bzw. biologischen Teilreinigung in so genannten unterirdischen Verrieselungsanlagen (Sandfiltergräben) unter der Geländeoberfläche verteilt werden, wo sie im Erdreich biologisch abgebaut werden. Das haustechnische Abwasserrohrleitungsystem besteht aus mehreren Anschlussleitungen, die das Abwasser der verschiedenen, mit Geruchsverschlüssen (Siphon) versehenen Entwässerungsvorrichtungen (Toilette, Ausgüsse, Waschbecken etc.) aufnehmen, zu einer Sammelanschlussleitung führen, von wo aus es über Fall-, Sammel- oder Grundleitungen zum Anschlusskanal transportiert wird, der in die Klärgrube oder den öffentlichen Straßenkanal mündet; ferner gibt es noch Lüftungsleitungen zur Be- und Entlüftung des Rohrsystems und Regenwasserleitungen.

Aus der DE 30 10 290 A1 ist ein Verfahren zur Nutzbarmachung von Regenwasser und zur Verwendung als Brauchwasser und/oder Rohwasser zur Trinkwasseraufbereitung u.a. bekannt. Als Sammelflächen für das zu nutzende Regenwasser finden geeignete Dächer, insbesondere wannenartig ausgebildete Flachdachkonstruktionen von Wohnhäusern, Garagen, Fabrikgebäuden usw., Verwendung, wobei diese Dachflächen - je nach Eignung - für das Sammeln/Stauen, Speichern bzw. Zwischenspeichern u.a. der in ihrem Bereich niedergehenden oder von anderen geeigneten Sammelflächen (z.B. Balkonflächen) dorthin zugeleiteten Regenwassermengen genutzt werden. Für das Stauen, Speichern bzw. Zwischenspeichern, Reinigen (z.B. Schnellfiltration über Sand, Kies, Aktiv-Kohle usw.), Mischen (z.B. mit Wasseraufbereitungszusätzen usw.), Dosieren, Zapfen bzw. Zuleiten, Verteilen usw. kann ein entsprechend ausgestalteter Staudruckbehälter benutzt werden. Mittels einem oder mehrerer Stauköpfe mit Überlaufeinrichtung kann das Versperren bzw. ein an einer Maximalhöhe orientierter, selbstregelnder Stauvorgang auf einem vorgegebenen und geeigneten Flachdachbereich von etwaig vorhandenen Regeneinläufen durchgeführt werden. Weiterhin sind ein großvolumiger Hauptspeicher sowie gegebenenfalls ein oder mehrere erdnahe, ebenerdige und/oder unterirdische Speicherbehältnisse, z.B. Zisternen, zur Aufnahme des vom Staudruckbehälter gereinigten bzw. aufbereiteten Regenwassers vorgesehen. Der Hauptspeicher weist eine Überlaufeinrichtung auf, um überschüssiges Regenwasser in eine vorhandene oder zu schaffende Kanalisation abzuleiten, wodurch sich je nach Regenwasserzuführ und/oder Entnahme ein an einem oberen Staupegel ausgerichteter, selbsttätiger Speichervorgang im Hauptspeicher bewirken lässt. Das im Hauptspeicher gesammelte Regenwasser wird über eine entsprechend dimensionierte Leitung (z.B. Schlauch- oder Rohrleitung u.a.) im Freifluss als Brauch- und/oder Rohwasser (z.B. zur weiteren Trinkwasseraufbereitung u.a.) den jeweiligen Verwendungsorten (Haus, Garten) zugeführt. Alternativ kann hierfür auch eine Pumpe vorgesehen werden, welche das Regenwasser aus dem Hauptspeicher über einen Druckbehälter in die Brauch- bzw. Rohwasserleitung(en) einspeist. Die Einspeisung in das Brauch- bzw. Rohwassernetz mittels einer Pumpe kann zusätzlich von entsprechenden Regel/Kontrollapparaturen (z.B. druckaktivierte Schalter, Mikroprozessoren usw.) über einen vorgegebenen Betriebsdruck selbsttätig regelnd ausgestaltet werden, wodurch sich die Einspeisung entsprechend der jeweiligen Bedarfslage anpasst.

Infolge von schwebenden und gelösten Verunreinigungen ist natürliches Wasser, insbesondere Regenwasser, für viele Zwecke ungeeignet. Störende organische und anorganische Substanzen werden nach unterschiedlichen Methoden entfernt: Sieben und Sedimentation zum Beseitigen der Schwebeteilchen, Behandlung mit Aktivkohle zur Entfernung von Geschmacks- und Geruchsstoffen, Filtration und Chlorierung oder Bestrahlung zum Abtöten infektiöser Mikroorganismen.
Bei der Durchlüftung sättigt man Wasser mit Luft. Dazu bringt man Wasser mit Luft in einer Weise in Kontakt, dass eine maximale Durchdringung stattfindet. Durch diesen Vorgang entfernt man Geruchs- und Geschmacksstoffe (die sich bei der Zersetzung organischer Materie gebildet haben) und vertreibt flüchtige Gase (z. B. Chlor). Bakterien werden durch Chlorierung abgetötet. Zu hohe Wasserhärte, die das Wasser für viele industrielle Verwendungszwecke ungeeignet macht, wird durch Ionenaustauscher oder Fällungsverfahren verringert. Schwebende organische Substanzen, die ein Nährboden für Bakterien sind, und mineralische Schwebstoffe werden vor der Klärung oder Filterung ausgeflockt oder ausgefällt, dazu dient die Zugabe eines Flockungs- oder Fällungsmittels, z. B. Alaun. Außerdem werden Eisen- und Manganverbindungen in unlösliche Oxidhydrate überführt. Diese lassen sich anschließend z. B. durch Filtration entfernen. Infolge des damit verbundenen Aufwands hat sich das in der DE 30 10 290 A1 beschriebene Verfahren zur Nutzbarmachung von Regenwasser, insbesondere für Trinkwasser, nicht durchsetzen können.

Ein weiteres Problem ist der sogenannte saure Regen, d.h. säurehaltige Niederschläge, die durch Luftverschmutzung verursacht werden und zu weit reichenden Umweltschäden führen. Saurer Regen entsteht, wenn Schwefeldioxid, Stickstoffoxide und andere säurebildende, gasförmige Luftverunreinigungen in der feuchten Atmosphäre zu Schwefelsäure und Salpetersäure umgewandelt (oxidiert) werden. Die gasförmigen Verunreinigungen können über weite Entfernungen hinweggetragen werden, bis sich deren Umwandlungsprodukte durch Regen, Nebel oder Schnee niederschlagen und in den Boden gelangen.

Um die Trennung von saurem Regen und verschmutztem Regenwasser von sauberem, zur Nutzung vorgesehenen Wasser zu ermöglichen, ist bei einem in der DE 93 00 620 Ul beschriebenen Regenwassersammler vorgesehen, dass in einem festgelegten Stauraum innerhalb des Regenwasserablaufes bei Regenbeginn eine bestimmte Wassermenge gespeichert wird, bis der Wasserstand den Ablauf für das zu nutzende Wasser erreicht. Dieser Stauraum kann aus einem wasserdichten Rohrabschnitt oder Behälter innerhalb des Fallrohres für Dachrinnen bestehen. Das Stauvolumen wird so groß gewählt, dass es das bei Regenbeginn anfallende, verschmutzte und angesäuerte Wasser speichern kann und erst verzögert nach Auffüllen des Stauraumes das später zulaufende Regenwasser in der gewünschten Qualität zur Nutzung ableitet. Das Stauvolumen muss der Wasserfassungsfläche - in der Regel die Dachfläche - und den regionalen Gegebenheiten der Luftverschmutzung angepasst sein, so dass sich der Stauraum in einer einstellbaren Zeitspanne von 1-2 Tagen über ein Absperrventil selbsttätig leert, um bei einem späterem Regenbeginn wieder verfügbar zu sein. Innerhalb des Stauraumes wird dabei eine Wasserumwälzung unterdrückt. Das Absperrventil ist leicht zu reinigen und kann bei Bedarf entfernt werden, damit das Regenwasser ohne Rückstau ungehindert ablaufen kann. Durch ein zusätzliches Ablaufrohr parallel zum Staurohr kann in Verbindung mit handelsüblichen Regulierventilen der Füllstand im Regenwassersammelbehälter gesteuert werden und das Überlaufen des Sammelbehälters vermieden werden, wobei die Öffnung dieses zusätzlichen Ablaufrohres über der Höhe des Nutzwasserablaufes liegen muss. Ein ähnlicher Regenwassersammler ist in der DE 89 15 204 U1 beschrieben.

Wie vorstehend beschrieben wird Regenwasser aus Gründen des Umweltschutzes und der Kostenersparnis zunehmend gesammelt und als Brauchwasser zur Bewässerung genutzt. Bei herkömmlichen Regenwassersammlern wird entweder das Regenwasser direkt in einen neben dem Fallrohr angeordneten Auffangbehälter eingeleitet oder aber das Regenwasser wird über einen Schlauch zu einem weiter entfernt stehenden Auffang-Behälter geleitet.

Bei der ersten Ausführungsform ist nur ein geringer Strömungswiderstand zu überwinden und damit eine hohe Fließgeschwindigkeit erreichbar. Nachteilig ist hierbei, dass eine Siebvorrichtung zur Aussonderung von im Regenwasser mitgeführten Fremdkörpern, insbesondere von Blättern, vorgesehen werden muß. Beispielsweise ist in der DE 31 39 304 A1 eine Vorrichtung für Regenfallrohre beschrieben, bei der ein in den Verlauf des Regenfallrohrs einzufügendes Gehäuse mit einem oberen Wassereintritt, mit einem unteren, mit der Siebvorrichtung versehenen Wasseraustritt und mit einer in seinem oberen Bereich vorgesehenen Entnahmeöffnung für ausgesonderte Fremdkörper vorgesehen ist. Eine ähnliche Ausgestaltung ist in der DE 42 37 201 C2 beschrieben, bei der im Gehäuse der Regenwasserauffangvorrichtung eine Auffangwanne vorgesehen ist, die an einer Seite des Gehäuses angeordnet ist und derart ins Gehäuse hineinragt, dass ihre Auffangöffnung im Abstand unterhalb einer Abrisskante des Eintrittsstutzens und im wesentlichen zentral zur Verlängerung der Fallachse des Eintrittsstutzens angeordnet und dem Eintrittsstutzen entgegengerichtet ist, und die eine seitlich aus dem Gehäuse führende Ableiteinrichtung für das Regenwasser aufweist. Die Siebeinrichtung ist derart in Schräglage über der Auffangöffnung der Auffangwanne angeordnet, dass die Schmutzelemente des Regenwassers zum Austrittsstutzen des Gehäuses ableitbar sind.

Bei der zweiten Ausführungsform wird das Ablaufvolumen maßgeblich von der Querschnittsfläche des Schlauchs und der erreichbaren Druckhöhe zwischen Rand des Regenwassersammlers und Schlauchanschluß bestimmt. Ist diese Höhe bzw. der entstehende Druck zu gering, so besteht die Gefahr, dass sich im Schlauch ein Wasserverschluß bildet. Besteht zwischen dem Regenwassersammler und der Wasserentnahmestelle am Auffang-Behälter eine Höhendifferenz von 2 m, dann steht ein Druck von 0,2 bar an, welcher zu einer ausreichend hohen Fließgeschwindigkeit führt.

Beispielsweise ist aus der DE 196 47 351 A1 eine Regenwasserableitvorrichtung zum Ableiten von Regenwasser aus Regenwasserrohren bekannt, welche entweder im Regenwasserfallrohr integriert ist oder welche durch Zwischensetzen montiert ist und an ihrem oberen und unteren Ende mit dem Regenwasserfallrohr verbunden ist.

Im einzelnen ist vorgesehen, dass die Regenwasserableitvorrichtung eine Regenwassersammelkammer aufweist, welche an ihrem oberen Ende einen Überlauf hat und an ihrem unteren Ende einen Ablauf, über den das Regenwasser nach außen durch ein Schlauch- oder Rohrsystem abgeführt wird. Der so in der Regenwassersammelkammer aufgebaute niedrige hydrostatische Druck soll das aufgefangene Regenwasser durch das Schlauch- oder Rohrsystem in einen nach oben offenen Sammelbehälter treiben. Dieser niedrige hydrostatische Druck bestimmt sich nach Maßgabe der Höhe des Wasserstands der Regenwassersammelkammer; der hydrostatische Druck im nachfolgenden Grauwasser- (Regenwasser-) Verteilsystem nach Maßgabe der Höhe des Wasserstands im Sammelbehälter. Da dieser unzureichend ist, ist zur Wasserentnahme eine Elektro-Wasserpumpe vorgesehen.

Schließlich ist aus der DE 43 11 565 A1 ein Wasserverteiler für Fallrohre unter Ausnutzung des hydrostatischen Drucks bei der Verteilung des gesammelten Regenwassers bekannt. Im einzelnen umfasst der Wasserverteiler ein längliches Rohr, welches ein offenes oberes Ende und ein offenes unteres Ende aufweist und welches verschiebbar und umschließend mit einem Fallrohr in Eingriff bringbar ist. Das offene obere Ende ist über dem Fallrohr in einem bestimmten Abstand oberhalb des unteren offenen Endes des Fallrohres angeordnet, wodurch das in dem Fallrohr herabströmende Regenwasser in das Rohr geleitet wird. Weiterhin ist eine Wasserauslassöffnung vorgesehen, die in dem Rohr nahe dem offenen unteren Ende und im Abstand unterhalb des offenen oberen Endes des Rohres angeordnet ist und eine Querschnittsfläche aufweist, die wesentlich geringer als die durchschnittliche Querschnittsfläche des Rohres ist. Das Rohr weist einen Schlauchanschluss auf, der mit der Wasserauslassöffnung in Verbindung steht. Daneben sind auf dem Rohr an dem offenen unteren Ende angeordnete Verschließ-Mittel vorgesehen, welche das Ausströmen von Regenwasser durch das offene untere Ende verhindern. Schließlich sind Haltemittel bzw. Klemmmittel vorgesehen, die das Rohr in einer Position relativ zu dem Fallrohr fixieren. Bei dieser Ausgestaltung wird die maximale Wasserdruckhöhe durch den Abstand zwischen dem oberen Ende des Rohres, wo das Regenwasser überläuft, und der Wasserauslaßöffnung bestimmt; bei der Ausgestaltung als Klemmmittel zur Abdichtung des offenen oberen Endes des Rohres wird die maximale Wasserdruckhöhe durch den Abstand zwischen Klemmmittel und Wasserauslassöffnung bestimmt.

Wie die vorstehende Würdigung des Standes der Technik aufzeigt, erfordert die Nutzung des Regenwassers entweder einen hohen Aufwand zur Wasseraufbereitung bzw. zur Verteilung oder der Verwendungszweck ist eingeschränkt.

Der Erfindung liegt gegenüber den bekannten Regenwassersammlern bzw. Regenwasserverteilern die Aufgabe zugrunde, ein Regenwassersammel- und Verteilsystem derart auszugestalten, dass keine im System angeordneten Pumpen erforderlich sind.

Diese Aufgabe wird, ausgehend von einem Regenwassersammel- und Verteilsystem mit den Merkmalen im Oberbegriff des Patentanspruchs 1, dadurch gelöst, dass - zur Erzeugung eines hohen hydrostatischen Drucks - das Regenwasser kurz unterhalb der vorhandenen Rinne bzw. Rinnenablaufes in einem Wasserfangkasten aufgefangen wird und über ein parallel zum Regenfallrohr verlaufendes Druckrohr, dessen Öffnung im Bodenbereich des Wasserfangkastens liegt, einem geschlossenen Druckbehälter zugeführt wird, welcher über einen Druckwasserstutzen mit dem nachfolgenden und unter Druck stehenden Grauwasser- (Regenwasser-) Verteilsystem verbunden ist und dass während des Regenfalls sich das Wasser über das Druckrohr bis zum höchstmöglichen Wasserstand im Wasserfangkasten aufstauen kann und danach über ein in das Regenfallrohr übergehendes Überlaufrohr, dessen Öffnung oberhalb der Öffnung des Druckrohres liegt, aus dem Wasserfangkasten abläuft.

Die erfindungsgemäße Vorrichtung weist den Vorteil auf, dass auf überraschend einfache Art und Weise, nämlich durch die Nutzung der gesamten Gebäudehöhe, ein hoher hydrostatischer Druck ohne Pumpen oder sonstige Hilfsmittel in dem Grauwasser- (Regenwasser-) Verteilsystem aufgebaut werden kann. Dadurch kann Grauwasser über größere Strecken auch bergauf transportiert werden. Sowohl im Einfamilienhausbereich als auch in großen Wohnanlagen läßt sich mit geringem Kapitaleinsatz das gesamte anfallende Regenwasser auch im Grauwasserbereich (WC-Anlagen, Waschmaschinen) nutzen. Weiterhin ist von Vorteil, dass bei flächendeckendem Einsatz außerdem manche Überschwemmung verhindert oder im Ausmaß minimiert werden könnte.

Im Vergleich zum Stand der Technik ist durch den Wegfall von Pumpen und entsprechender elektrischer Steuerungen der kostenmäßige Aufwand gering. Durch das Ausnutzen der gesamten Gebäudehöhe zum Druckaufbau wird erreicht, dass die Gefahr eines Wasserverschlußes bzw. einer Verstopfung minimal ist.

Bei einer bevorzugten Ausgestaltung der Erfindung gemäß Patentanspruch 2, geht das Überlaufrohr (bzw. Regenfallrohr) durch den Druckwasserbehälter hindurch und weist im Bereich des Druckwasserbehälters seitlich ein kleines Loch auf, so dass eine langsame Zwangsentleerung und nach einiger Zeit die Wasserstandshöhe "drucklos" im Überlaufrohr (bzw. Regenfallrohr) erreicht wird.

Diese Ausgestaltung der Erfindung weist den Vorteil auf, dass ein Einfrieren des Regenwassersammel- und Verteilsystems zuverlässig vermieden wird. Die Frostsicherheit kann noch weiter erhöht werden, indem gemäß Patentanspruch 11, im Wasserfangkasten ein an das Druckrohr angeschlossener Einlaufbogen angeordnet ist, dessen Einlauföffnung unterhalb dem Wasserspiegel entsprechend dem Überlauf in das Überlaufrohr oder dem Einlauf in das Druckrohr liegt. Dadurch wird erreicht, dass bei ständig wechselndem Tau- und Frostwetter kein Wasser langsam im Druckrohr in den Druckbehälter fließt, dabei gefriert und den Druckbehälter bzw. das Druckrohr mit Eis gefüllt wird

Gemäß Patentanspruch 3, weist das Druckrohr seitlich ein zusätzliches Einlaufloch im Bereich des Druckwasserbehälters auf, so daß bei Verschmutzung des Druckwasserbehälters bis zum Ende des Druckrohrs noch eine zusätzliche Einlaufmöglichkeit gegeben ist.

Durch die zusätzliche Einlaufmöglichkeit wird erreicht, dass im Hinblick auf eine zwangsläufig vorhandene Verschmutzung im Druckbehälter, die Reinigungsintervalle zeitlich größer gewählt werden können und zudem in der Praxis beim Überlauf ein Freispülen des tieferliegenden Druckrohrendes zu beobachten ist.

Vorzugsweise sind, gemäß Patentanspruch 4, in dem Druckbehälter ein Beruhigungsblech und darüber ein Filtergitter angeordnet, so dass das Regenwasser zuerst durch das Filtergitter und dann durch den Druckwasserstutzen in das nachfolgende Grauwasser- (Regenwasser-) Verteilsystem gelangt.

Vor allem im Grauwasserbereich (WC-Anlagen, Waschmaschinen) kann bereits beim Zulauf eine gute Vorreinigung erreicht werden; anstelle von Beruhigungsblech und Filtergitter können auch handelsübliche Filter benutzt werden.

In Weiterbildung der Erfindung weist, gemäß Patentanspruch 5, der Druckwasserstutzen ein Rückschlagventil auf.

Diese Weiterbildung der Erfindung weist den Vorteil auf, dass kein Grauwasser aus dem Verteilsystem in den Druckbehälter zurücklaufen kann. Zudem ist eine Entlüftung über den Druckbehälter und damit eine Geruchsbelästigung praktisch ausgeschlossen.

Bei einer bevorzugten Ausgestaltung der Erfindung gemäß Patentanspruch 6 weist der Druckwasserbehälter eine Reinigungsöffnung auf.

Diese Ausgestaltung der Erfindung weist den Vorteil auf, dass die wichtige Vorreinigung am Boden (ebenerdig) vorgenommen wird und demzufolge der Druckbehälter einfach gereinigt werden kann.

Gemäß Patentanspruch 7 weist der Wasserfangkasten einen Notüberlauf auf, welcher oberhalb der Öffnung des Überlaufrohrs angeordnet ist.

Durch das Vorsehen des Notüberlaufs kann die Betriebssicherheit des Regenwassersammel- und Verteilsystems weiter verbessert werden, so daß sich Verstopfungen des Systems nicht nachteilig auswirken.

Vorzugsweise weist, gemäß Patentanspruch 8, der Druckwasserbehälter einen Entleerungs- und Reinigungsstutzen auf, welcher im Bereich des Bodens des Druckwasserbehälters angeordnet ist.

Hierdurch besteht die Möglichkeit zu Reinigungszwecken eine Entleerung des Regenwassersammel-Systems rasch vorzunehmen, ohne abwarten zu müssen, bis über die langsame Zwangsentleerung nach einiger Zeit die Wasserstandshöhe "drucklos" erreicht wird.

Gemäß Patentanspruch 9 ist vor dem Loch ein Filtergitter angeordnet.

Diese Weiterbildung der Erfindung weist den Vorteil auf, dass keine Schwebeteile das kleine Loch verstopfen können.

Schließlich ist, gemäß Patentanspruch 10 vorgesehen, dass das an den Druckwasserstutzen angeschlossene Grauwasser- (Regenwasser-) Verteilsystem einen im Hausbereich angeordneten Grauwassertank und/oder einen im Gelände stehenden Zusatzbehälter zum/für den Grauwassertank aufweist.
Durch diese Ausgestaltung mit zusätzlichen Wasserreservoirs im Gelände kann der Grauwassertank im Keller möglichst platzsparend (klein) ausgelegt werden.

Weitere Vorteile und Einzelheiten lassen sich der nachfolgenden Beschreibung einer in der Zeichnung dargestellten bevorzugten Ausführungsform der Erfindung entnehmen. In der Zeichnung zeigt:
- FIG. 1a: eine Ausführungsform des erfindungsgemäßen Regenwassersammel- und Verteilsystems in der Seitenansicht und
- FIG. 1b: dieses in der Seitenansicht um 90° gedreht,
- FIG. 2: eine erste Einsatzmöglichkeit und
- FIG. 3: eine zweite Einsatzmöglichkeit des erfindungsgemäßen Regenwassersammel- und Verteilsystems teilweise im Schnitt.

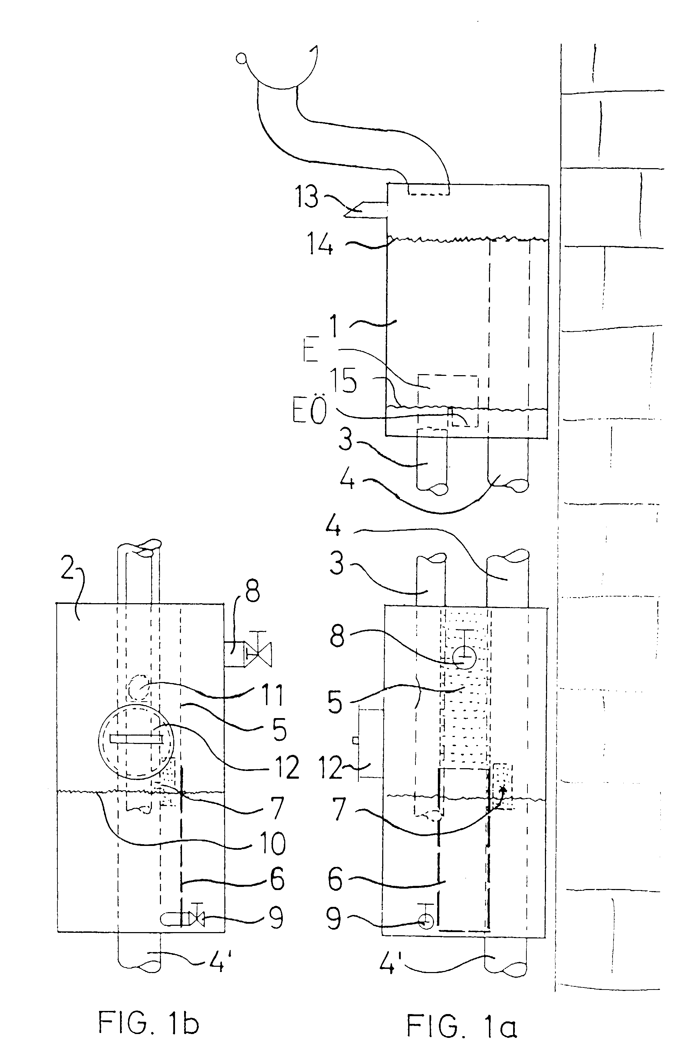

FIG. 1a und FIG. 1b zeigen eine Ausführungsform des erfindungsgemäßen Regenwassersammel- und Verteilsystems in der Seitenansicht, FIG. 1b um 90° gegenüber FIG. 1a gedreht. Das Regenwasser wird kurz unterhalb der vorhandenen Rinne bzw. des Rinnenablaufes im Wasserfangkasten 1 aufgefangen und im Druckrohr 3 dem Druckbehälter 2 zugeführt. Das Wasser tritt über das Druckrohr 3 in den Druckbehälter 2 ein und staut sich bis zum höchstmöglichen Wasserstand 14. Danach läuft das Wasser über das Überlaufrohr 4 in dem vorhandenem Regenfallrohr 4' ab.

Das vorhandene Regenfallrohr 4' wird dann ebenerdig mit dem Überlaufrohr 4, das auch den Druckbehälter 2 führt, verbunden und am unteren Ende einfach in den vorhandenen Abfluss gesteckt.

In dem Druckbehälter 2 befindet sich das Beruhigungsblech 6 und darüber das Filtergitter 5. Durch das Filtergitter 5 gelangt das Wasser dann durch den Druckwasserstutzen 8 in das nachfolgende Grauwasser- (Regenwasser-) System. Bei Verschmutzung des Druckwasserbehälters 2 bis zur Wasserstandshöhe 10 ist noch eine zusätzliche Einlaufinöglichkeit mit dem Einlaufloch 11 gegeben.

Die Wasserstandshöhe "drucklos" wird durch ein kleines Loch 7 (Zwangsentleerung mit Filtergitter) erreicht. Der ständige kleine Wasserverlust während des Betriebes durch die Zwangsentleerung, die das Einfrieren des Systems unter Druck verhindert, ist zu vernachlässigen. Zur weiteren Erhöhung der Frostsicherheit ist im Wasserfangkasten 1 ein an das Druckrohr 3 angeschlossener Einlaufbogen E angeordnet, dessen Einlauföffnung EÖ unterhalb dem Wasserspiegel entsprechend dem Überlauf in das Überlaufrohr 4 oder dem Einlauf in das Druckrohr 3 liegt. Der sich im Wasserfangkasten 1 einstellende ständige Wasserstand ist mit dem Bezugszeichen 15 bezeichnet.

Weitere Teile des erfindungsgemäßen Regenwassersammel- und Verteilsystems sind die Reinigungsöffnung 12, der Notüberlauf 13 und der Entleerungs- und Reinigungsstutzen 9.

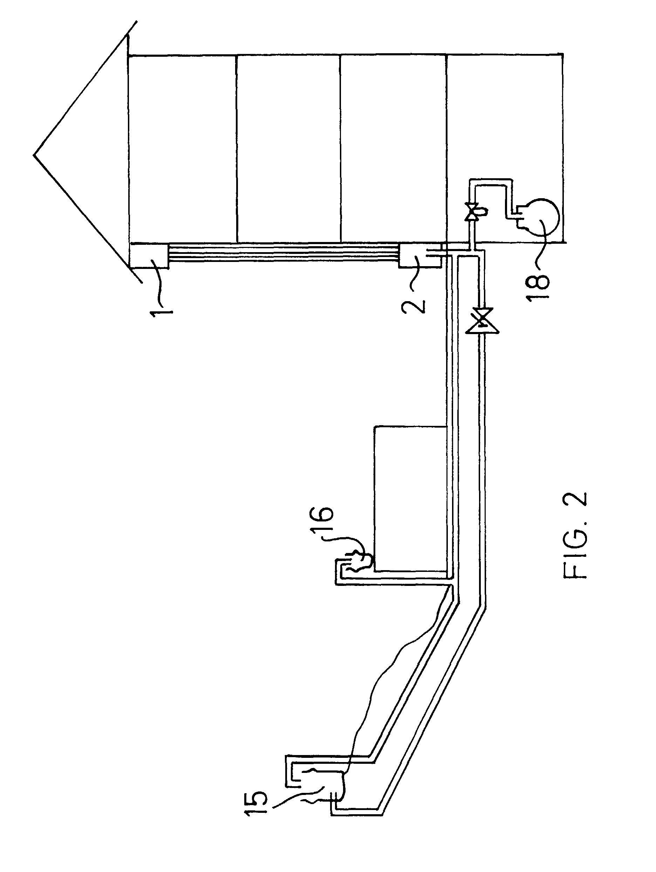

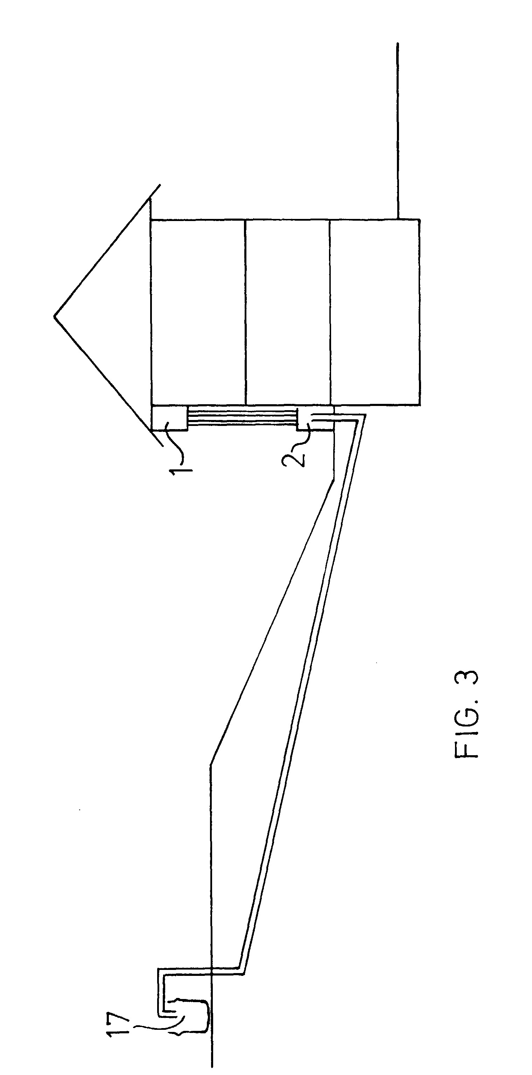

Ob der Druckwasserstutzen 8 mit oder ohne Rückschlagventil versehen wird, ist abhängig von den nachfolgenden Einsatzsystemen, welche in FIG. 2 und FIG. 3 zeichnerisch dargestellt sind. Dabei zeigt FIG. 2 ein Beispiel für die kombinierte Aufstellung von Grauwassertank 18 im Keller und Zusatzbehälter 15 und 16 in weitgehend flachem Gelände und FIG. 3 die Aufstellung des Zusatzbehälters 17 in hügeligem Gelände.

Der entscheidende Vorteil des erfindungsgemäßen Systems im Vergleich zum gewürdigten Stand der Technik ist die Nutzung der gesamten Gebäudehöhe, um Druck ohne Pumpen oder sonstige Hilfsmittel in dem Grauwasser-(Regenwasser-) Verteilsystem aufzubauen. Dadurch kann Grauwasser über größere Strecken bergauf transportiert werden. Sowohl im Einfamilienhausbereich als auch in großen Wohnanlagen läßt sich mit geringem Kapitaleinsatz und etwas topographischer Phantasie das gesamte anfallende Regenwasser nutzen. Bei flächendeckendem Einsatz besteht zudem die Möglichkeit Überschwemmungen zu verhindern oder im Ausmaß zu minimieren.

Im Grauwasserbereich (WC-Anlagen, Waschmaschinen) ist außerdem von Vorteil, dass beim Zulauf bereits mit handelsüblichen Filtern eine gute Vorreinigung erreicht werden kann bzw. zusätzliche Wasserreservoirs im Gelände angelegt werden können, um den Grauwassertank (siehe FIG. 2 Grauwassertank 18) im Keller möglichst platzsparend (klein) auszulegen.

Ein weiterer wichtiger Vorteil des erfindungsgemäßen Regenwassersammel- und Verteilsystems liegt darin, dass die wichtige Vorreinigung am Boden (ebenerdig) vorgenommen wird und dass die Anlage bei Reinhaltung und fachmännischer Planung und Ausführung frostsicher ist.

Die vorstehend beschriebenen Systeme beim Stand der Technik können teilweise nicht, oder nur sehr aufwendig, gereinigt werden, sind nicht frostsicher und sind nicht dafür konzipiert die gesamte Gebäudehöhe zum Druckaufbau auszunutzen, insbesondere dass der im Grauwasser-Verteilsystem aufgebaute hohe hydrostatische Druck konstant bleibt.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann das Filtergitter parallel zum Gehäuseboden des Druckbehälters oberhalb und die Reinigungsöffnung unterhalb des Rohrendes des Druckrohrs angeordnet sein; das Überlaufrohr fehlt und das vorhandene Regenfallrohr wird einerseits an den Notüberlauf und anderseits über ein Rohrstück kleiner Querschnittsfläche an den Druckbehälter angeschlossen u.a.

## Patentansprüche

1. Regenwassersammel- und Verteilsystem, bei dem das über Dachrinnen in ein Regenfallrohr (4) geleitete Regenwasser in einem das Regenfallrohr (4) umschließenden Rohr angesammelt und mit hydrostatischem Druck verteilt wird, **dadurch gekennzeichnet,** dass - zur Erzeugung eines hohen hydrostatischen Drucks - das Regenwasser kurz unterhalb der vorhandenen Rinne bzw. Rinnenablaufes in einem Wasserfangkasten (1) aufgefangen wird und über ein Druckrohr (3), dessen Öffnung im Bodenbereich des Wasserfangkastens (1) liegt, einem Druckbehälter (2) zugeführt wird, welcher über einen Druckwasserstutzen (8) mit dem nachfolgenden Grauwasser- (Regenwasser-) Verteilsystem (15, 18) verbunden ist und dass während des Regenfalls sich das Wasser über das Druckrohr (3) bis zum höchstmöglichen Wasserstand (14) im Wasserfangkasten (1) aufstauen kann und danach über ein Überlaufrohr (4), dessen Öffnung oberhalb der Öffnung des Druckrohres (3) liegt, aus dem Wasserfangkasten (1) abläuft.

2. Regenwassersammel- und Verteilsystem nach Anspruch 1, **dadurch gekennzeichnet,** dass das Überlaufrohr (4) unterhalb des Druckwasserbehälters (2) mit dem Regenfallrohr (4) verbunden ist und im Bereich des Druckwasserbehälters (2) seitlich ein kleines Loch (7) aufweist, so dass eine langsame Zwangsentleerung und nach einiger Zeit die Wasserstandshöhe "drucklos" erreicht wird.

3. Regenwassersammel- und Verteilsystem nach Anspruch 1, **dadurch gekennzeichnet,** dass das Druckrohr (3) seitlich ein zusätzliches Einlaufloch (11) im Bereich des Druckwasserbehälters (2) aufweist, so daß bei Verschmutzung des Druckwasserbehälters (2) bis zum Ende (10) des Druckrohrs (3) noch eine zusätzliche Einlaufinöglichkeit gegeben ist.

4. Regenwassersammel- und Verteilsystem nach Anspruch 1, **dadurch gekennzeichnet,** dass in dem Druckbehälter (2) ein Beruhigungsblech (6) und darüber ein Filtergitter (5) angeordnet sind und dass das Regenwasser zuerst durch das Filtergitter (5) und dann durch den Druckwasserstutzen (8) - in das nachfolgende Grauwasser- (Regenwasser-) Verteilsystem (15, 18) gelangt.

5. Regenwassersammel- und Verteilsystem nach Anspruch 1, **dadurch gekennzeichnet,** dass der Druckwasserstutzen (8) ein Rückschlagventil aufweist.

6. Regenwassersammel- und Verteilsystem nach Anspruch 1, **dadurch gekennzeichnet,** dass der Druckwasserbehälter (2) eine Reinigungsöffnung (12) aufweist.

7. Regenwassersammel- und Verteilsystem nach Anspruch 1, **dadurch gekennzeichnet,** dass der Wasserfangkasten (1) einen Notüberlauf (13) aufweist, welcher oberhalb der Öffnung des Überlaufrohrs (4) angeordnet ist.

8. Regenwassersammel- und Verteilsystem nach Anspruch 1, **dadurch gekennzeichnet,** dass der Druckwasserbehälter (2) einen Entleerungs- und Reinigungsstutzen (9) aufweist, welcher im Bereich des Bodens des Druckwasserbehälters (2) angeordnet ist.

9. Regenwassersammel- und Verteilsystem nach Anspruch 2, **dadurch gekennzeichnet,** dass vor dem Loch (7) ein Filtergitter angeordnet ist.

10. Regenwassersammel- und Verteilsystem nach Anspruch 1, **dadurch gekennzeichnet,** dass das an den Druckwasserstutzen (8) angeschlossene Grauwasser- (Regenwasser-) Verteilsystem (15, 18) einen im Hausbereich angeordneten Grauwassertank (18) und/oder einen im Gelände stehenden Zusatzbehälter (15) zum/für den Grauwassertank (18) aufweist.

11. Regenwassersammel- und Verteilsystem nach Anspruch 1, **dadurch gekennzeichnet,** dass im Wasserfangkasten (1) ein an das Druckrohr (3) angeschlossener Einlaufbogen (E) angeordnet ist, dessen Einlauföffnung (EÖ) unterhalb dem Wasserspiegel entsprechend dem Überlauf in das Überlaufrohr (4) oder dem Einlauf in das Druckrohr (3) liegt.
